Europäisches Patentamt

European Patent Office

Office européen des brevets

(11) Publication number: **0 265 798 B1**

# EUROPEAN PATENT SPECIFICATION

(45) Date of publication of patent specification: **23.12.92**   (51) Int. Cl.⁵: **G11B 5/39**

(21) Application number: **87115179.1**

(22) Date of filing: **16.10.87**

(54) **A magnetoresistive read transducer.**

(30) Priority: **31.10.86 US 926076**
      **31.10.86 US 926148**

(43) Date of publication of application:
     **04.05.88 Bulletin 88/18**

(45) Publication of the grant of the patent:
     **23.12.92 Bulletin 92/52**

(84) Designated Contracting States:
     **DE FR GB IT**

(56) References cited:
     **EP-A- 0 100 841**
     **EP-A- 0 152 000**
     **EP-A- 0 216 062**
     **GB-A- 2 146 482**

(73) Proprietor: **International Business Machines
     Corporation
     Old Orchard Road
     Armonk, N.Y. 10504(US)**

(72) Inventor: **Krounbi, Mohamad Towfik
     6238 Paso Los Cerritos
     San Jose California 95120(US)**
     Inventor: **Voegeli, Otto
     13465 Sycamore Avenue
     Morgan Hill California 95037(US)**
     Inventor: **Tsang, Ching Hwa
     882 Helena Drive
     Sunnyvale California 94087(US)**

(74) Representative: **Moss, Robert Douglas
     IBM United Kingdom Limited Intellectual
     Property Department Hursley Park
     Winchester Hampshire SO21 2JN(GB)**

Rank Xerox (UK) Business Services

## Description

This invention relates to a magnetoresistive transducer for reading information signals from a magnetic record medium.

An MR sensor detects magnetic field signals through the resistance changes of a read element made from a magnetoresistive material as a function of the amount and direction of magnetic flux being sensed by the element.

Problems with MR sensors of unstable operating characteristics and Barkhausen noise have limited their use. These problems arise because there generally exists more than one stable state for the magnetization, a degeneracy which typically produces various multi-domain configurations. Random changes in this configuration are the cause of the above-mentioned unstable operating characteristics and Barkhausen noise.

EP -A- 0 216 062 discloses how patterned longitudinal bias may be used to overcome the aforementioned problems. More particularly, a longitudinal bias is produced in the end regions only of the MR layer to maintain the end regions in a single domain state and these single domain states induce a single domain state in the central region of the MR layer. In a specific embodiment, a thin film of soft magnetic material is provided parallel to, but spaced from, the MR layer to also produce a transverse bias in the central region only of the MR layer to maintain the central region, where the output signal is sensed, in a linear response mode. The introduction of the soft magnetic material may, however, give rise to some problems. Specifically, as a single domain state is induced only in the end regions of the MR layer and the domain state in the end regions of the soft magnetic bias film is left undefined, the total amount of magnetic flux coming in from the passive end regions is still undefined and some unstable operating characteristics and Barkhausen noise may still occur.

This invention seeks to maintain the magnetization within the passive end regions of a MR sensor in a single domain state, so as to keep at a constant value the magnetic flux entering the central active region of the MR sensor from the passive end regions.

The invention provides a magnetoresistive read transducer comprising: a thin magnetoresistive layer, a nonmagnetic decoupling layer covering the magnetoresistive layer; a thin film of soft magnetic material covering the decoupling layer; longitudinal-bias producing means for producing a longitudinal bias directly in only end regions of the magnetoresistive layer of a level sufficient to maintain the end regions of the magnetoresistive layer in a single domain state, the single domain states of the end regions thereby inducing a single domain state in the central region; a pair of conductors electrically connected to opposite ends of said central region of the magnetoresistive layer; and means for supplying a bias current to the pair of conductors to magnetically bias the magnetoresistive layer with transverse bias of a level sufficient to maintain the magnetoresistive layer in a high sensitivity condition whereby, upon connection of the pair of conductors to a signal sensing means, the signal sensing means determines the resistance changes in the magnetoresistive layer as a function of the fields which are intercepted by the magnetoresistive layer, characterised in that:- the nomagnetic decoupling layer covers only a central region of the magnetoresistive layer.

How the invention can be carried out will now be described by way of example, with reference to the accompanying diagrammatic drawings, in which:

Fig. 1 is an end view of a known magnetoresistive read transducer assembly;

Fig. 2 is an end view of one magnetoresistive read transducer assembly embodying the present invention;

Fig. 3 is an end view of another magnetoresistive read transducer assembly embodying the invention;

Fig. 4 is a exploded perspective view which shows the magnetization configuration of the thin film of soft magnetic material and the MR layer of the magnetic read transducer assembly of Fig. 2;

FIG. 5 is a plan view of a further magnetoresistive read transducer embodying the invention; and

Fig. 6 is an end view of another magnetoresistive read transducer assembly embodying the invention.

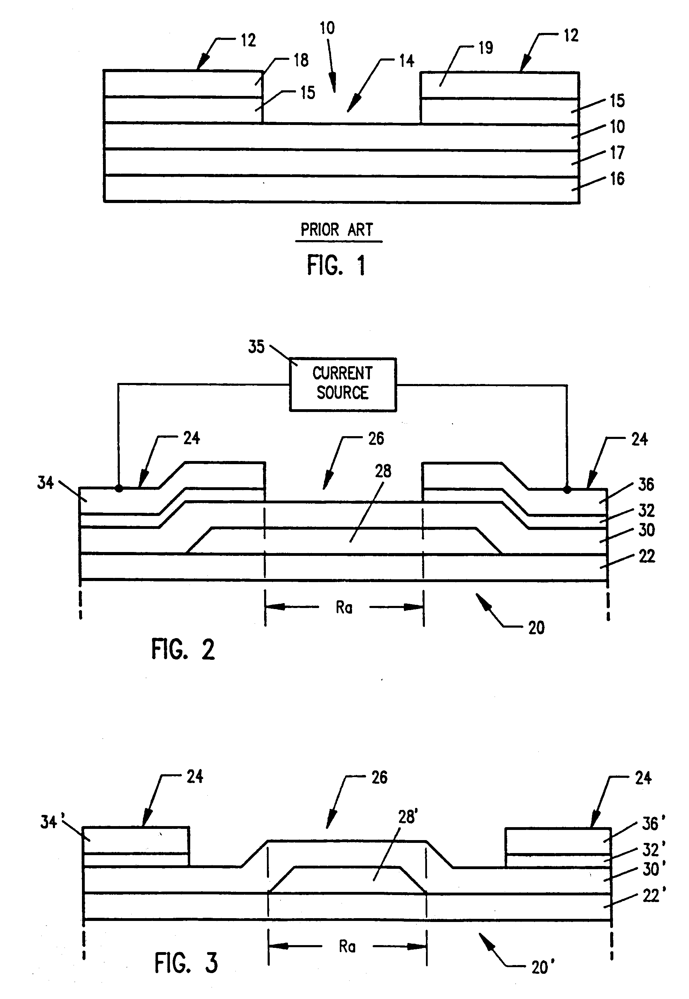

A known magnetic read head 11 incorporates a magnetoresistive (MR) sensor 10 (Fig. 1) having three regions, an active region 14 where actual sensing of data is accomplished, and end regions 12. The regions are biased in different ways with longitudinal bias only in the end regions 12 and transverse bias in the active region 14. The longitudinal bias is produced by an antiferromagnetic exchange bias layer 15 which is deposited in direct physical contact with MR layer 10. The transverse bias is produced by soft magnetic film layer 16 which is separated from MR layer 10 by a thin nonmagnetic spacer layer 17 whose purpose is to prevent, within the active central region, a magnetic exchange coupling between the MR layer 10 and the soft magnetic film layer 16. The distance between the inner edges of conductors 18 and 19 comprises the detection region over which the output signal is sensed.

The design of this sensor is based on the premise that with the end regions 12 in a single domain state, the central region 14 is forced into a single domain state so long as the longitudinally unbiased central region is not too long in comparison to the height of the sensor. This sensor design has been demonstrated to provide much more stable operating characteristics and better suppression of Barkhausen noise than designs without exchange biasing provisions, while at the same time not to adversely affect sensor sensitivity as with designs having continuous exchange bias over the active and passive MR sensor segments.

With reference to Fig. 2, a magnetic read head assembly 20 embodying the invention, comprises a magnetoresistive (MR) sensor 22, which is provided with longitudinal bias for domain suppression applied only to the end regions 24 and is provided with transverse bias for a linear response mode only in the central region 26. The active read region, over which the output signal is sensed, corresponds to the part of the central region 26 which is provided with transverse bias.

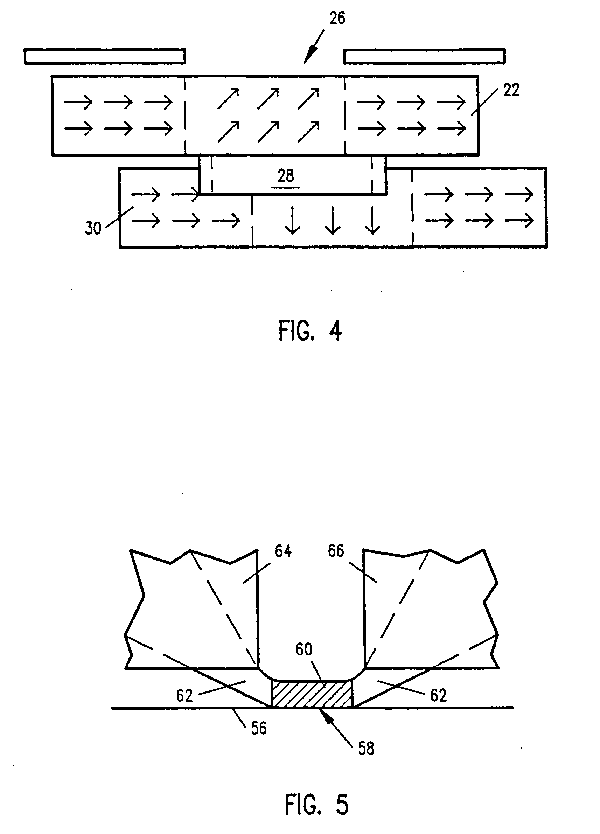

The MR sensor 22 is first deposited over both end regions 24 and central region 26. Thin nonmagnetic spacer layer 28 is deposited only in the central region 26 and soft magnetic film layer 30 is deposited over both the end regions 24 and the central region 26. The soft magnetic film layer 30 is separated from MR sensor 22 in the central region 26 by thin spacer layer 28 so that a transverse bias can be produced only in the central region 26 of the MR sensor 22 to produce a linear response mode in MR sensor 22. Although the MR sensor 22 is shown as deposited first in Fig. 2, soft magnetic film layer 30 could as well be deposited first, followed by thin spacer layer 28 and then by the MR sensor 22. An antiferromagnetic layer 32 is deposited over the soft magnetic film layer 30 only in the end regions 24. Antiferromagnetic layer 32 creates an interfacial exchange interaction with the soft magnetic film layer 30 that results in an effective bias field experienced by soft magnetic film layer 30 and also by the MR sensor 22 which is in contact with the soft magnetic film layer 30. The resulting bias field is oriented longitudinally for domain suppression as is shown in Fig. 4. Conductor leads 34 and 36, over which the output signal is sensed, are deposited only in the end regions 24 over the antiferromagnetic layer 32.

A bias current source 35 is connected between conductor leads 34 and 36 to produce a bias current in the central region 26 of the MR sensor 22 to magnetically bias the MR sensor with transverse bias. The transverse bias is produced in that part of the central region 26 of the MR sensor 22 in which the bias current and the thin spacer layer 28 are both present. The transverse bias produces magnetization at a chosen angle, as shown in Fig.

4, in the central region 26 of the MR sensor 22 so that the MR sensor 22 is maintained in a high sensitivity condition. In the embodiment shown in Fig. 2, the transverse bias is provided in a central active region Ra.

In the embodiment of Fig. 3, the MR layer 22′ is deposited as before, but, in this embodiment, the extent of the thin nonmagnetic spacer layer 28′ is less than the distance between the inner edges of the conductor leads 34′ and 36′ and antiferromagnetic layer 32′. The central active region Ra is again defined by the extent of the MR sensor within the central region in which a bias current and thin spacer layer 28′ are present. In common with the embodiment shown in Fig. 2, the position of the MR sensor 22′ and the soft magnetic film layer 30′ can be reversed, if desired.

A further embodiment of the MR read transducer assembly is shown in FIG. 5 in which the MR read transducer assembly has a sensing edge 56 which is closely spaced from the magnetic medium during normal operation. In this embodiment the MR element 58 is shaped so that only the active central region 60 of the sensor extends to the sensing edge. The active region (shown shaded in the drawing) 60 is defined by the extent of the spacer member in common with the embodiment shown in Fig. 3. The end regions 62 of the MR element 58 are tapered to become wider with increasing distance from the central region and tilted away from the sensing edge, and conductor leads 64 and 66 are in contact with the end regions 62 away from the sensing edge.

The embodiment of the MR read transducer assembly shown in FIG. 5 has the advantage of less sensitivity to its operating environment since only the central region of the MR element extends to the sensing edge. The fact that the conductor leads do not extend to the sensing edge eases mechanical problems, and the tapering and tilting of the MR sensor in the end regions leads to reduced side reading. Since any deterioration of the MR sensor/conductor lead electrical contact adversely affects the sensitivity profile, this design prevents deterioration since the electrical contact is not exposed at the sensing edge.

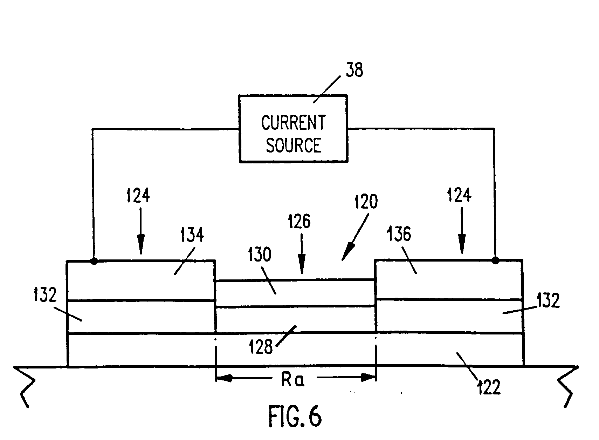

In the embodiment of Fig. 6, a magnetic read head 120 incorporates an MR sensor 122 provided with longitudinal bias for domain suppression only in its end regions 124 and with transverse bias for a linear response mode only in its central region 126. The active read region Ra, over which the output signal is sensed, corresponds to the part of the central region 126 which is provided with transverse bias.

The MR sensor 122 is first deposited over both end regions 124 and central region 126. A spacer layer 128 is formed only over the central region 126 of the MR sensor layer 122 and a soft magnetic film layer 130 is formed only over the spacer layer 128 so that a transverse bias can be produced only in the central region 126 of the MR sensor 122 to produce a linear response mode in MR sensor 122. An antiferromagnetic layer 132 is formed only in the end regions of MR sensor layer 122. Antiferromagnetic layer 132 creates an interfacial exchange interaction with the MR sensor 122 that results in an effective bias field experienced by the MR sensor 122, and this bias field is oriented longitudinally for domain suppression. Conductor leads 134 and 136, over which the output signal is sensed, are deposited only on the antiferromagnetic layer 132, i.e. only over the end regions 124 of MR sensor layer 122. The position of the MR sensor 122 and the soft magnetic film layer 130 can be reversed, if desired.

A bias current source 38 is connected between conductor leads 134 and 136 to produce a bias current in the central region 126 of the MR sensor 122 to magnetically bias the MR sensor with transverse bias. The transverse bias is produced in that part of the central region 126 of the MR sensor 122 in which the bias current and the spacer layer 128 are both present. The transverse bias produces magnetization at a chosen angle in the central region 126 of the MR sensor 122 so that the MR sensor 122 is maintained in a high sensitivity condition.

Note that both the soft magnetic film 130 and the spacer layer 128 extend only over the central region 126 of the MR sensor 122 in contrast to the arrangement in the known design of Fig. 1 in which the corresponding layers are continuous over the entire length of the MR sensor 10.

A magnetic read head embodying the present invention can be fabricated by any suitable method known to those skilled in the art. In a specific embodiment, a thin film of a suitable MR material such as NiFe, a patterned thin film spacer layer of a suitable material such as Ta, a soft magnetic film layer of a suitable material such as NiFeRh, a layer of antiferromagnetic material such as MnFe, and conductive leads are deposited upon a suitable substrate in successive layers which are appropriately patterned using lithographic thin film processing techniques known to those skilled in the art.

It can be seen that the magnetic read head embodying the present invention has a soft film transverse bias exclusively in the active part of the central region of the head since the spacer layer served to break the exchange coupling between the MR sensor and the soft magnetic film. The use of the present invention increases the range of stable operation relative to the various disturb conditions. It also self-initiates the proper magnetization configuration thereby eliminating the need for device initialisation.

## Claims

1. A magnetoresistive read transducer comprising:
    a thin magnetoresistive layer (22),
    a nonmagnetic decoupling layer (28) covering the magnetoresistive layer;
    a thin film (30) of soft magnetic material covering the decoupling layer;
    longitudinal-bias producing means (32) for producing a longitudinal bias directly in only end regions (24) of the magnetoresistive layer of a level sufficient to maintain the end regions of the magnetoresistive layer in a single domain state, the single domain states of end regions thereby inducing a single domain state in the central region;
    a pair of conductors (34,36) electrically connected to opposite ends of said central region of the magnetoresistive layer; and
    means for supplying a bias current (35) to the pair of conductors to magnetically bias the magnetoresistive layer with transverse bias of a level sufficient to maintain the magnetoresistive layer in a high sensitivity condition whereby, upon connection of the pair of conductors to a signal sensing means, the signal sensing means determines the resistance changes in the magnetoresistive layer as a function of the fields which are intercepted by the magnetoresistive layer,
    characterised in that:-
    the nonmagnetic decoupling layer covers only a central region of the magnetoresistive layer.

2. A transducer as claimed in claim 1, in which (Figs 2 and 3) the thin film of soft magnetic material contacts the magnetoresistive layer on each side of the central region thereof.

3. A transducer as claimed in claim 2, in which (Fig 2) the longitudinal-bias producing means and the pair of conductors overlap the nonmagnetic decoupling layer.

4. A transducer as claimed in claim 2, in which (Fig. 3) the longitudinal-bias producing means (32') and the pair of conductors (34',36') are disposed only over the outermost parts of the end regions of the magnetoresistive layer (22'), so that the innermost parts of the end regions are not covered by the pair of conductors.

5. A transducer as claimed in claim 1, in which (Fig. 6) the thin film (130) of soft magnetic material does not overlap the decoupling layer (128).

6. A transducer as claimed in any preceding claim, in which the magnetoresistive layer is composed of NiFe.

7. A transducer as claimed in any preceding claim, in which the longitudinal-bias producing means comprises a thin film of antiferromagnetic material in direct contact with the end regions of the magnetoresistive layer.

8. A transducer as claimed in claim 7, in which the thin film of antiferromagnetic material is MnFe.

9. A transducer as claimed in any preceding claim, in which the soft magnetic material is NiFeRh.

10. A transducer as claimed in any preceding claim, in which the decoupling layer is composed of Ta.

11. A transducer as claimed in any preceding claim, in which the magnetoresistive layer is shaped so that only its central region extends to a sensing edge.

12. A transducer as claimed in claim 11, in which the end regions of the magnetoresistive layer are tilted away from said sensing edge.

13. A transducer as claimed in claim 11 or claim 12, in which the end regions of the magnetoresistive layer are tapered to become wider with increasing distance from said central region.

**Patentansprüche**

1. Magnetoresistiver Lesewandler, welcher aufweist:
eine dünne magnetoresistive Schicht (22),
eine die magnetoresistive Schicht bedeckende, nichtmagnetische Entkopplungsschicht (28),
einen die Entkopplungsschicht bedeckenden dünnen Film (30) aus weichmagnetischem Material,
ein eine Längsvormagnetisierung erzeugendes Mittel (32), um lediglich in Endbereichen (24) der magnetoresistiven Schicht direkt eine Vormagnetisierung in Längsrichtung zu erzeugen, deren Pegel ausreichend ist, um die Endbereichen der magnetoresistiven Schicht in einem Eindomänenzustand zu halten, wobei die Eindomänenzustände von Endbereichen hiedurch einen Eindomänenzustand in dem Zentralbereich induzieren,
ein Paar von Leitern (34, 36), die mit gegenüberliegenden Enden des Zentralbereichs der magnetoresistiven Schicht elektrisch verbunden sind, und
ein Mittel (35), welchem dem Paar von Leitern einen Vormagnetisierungsstrom zuführt, um die magnetoresistive Schicht mit einer Quervormagnetisierung vorzumagnetisieren, deren Pegel ausreichend ist, um die magnetoresisitive Schicht in einem hochempfindlichen Zustand zu halten, wobei nach Verbinden des Leiterpaares mit einem Signalerfassungsmittel das Signalerfassungsmittel die Widerstandsänderungen in der magnetoresistiven Schicht als Funktion der von der magnetoresitiven Schicht aufgefangenen Felder bestimmt,
dadurch gekennzeichnet, daß
die nichtmagnetische Entkopplungsschicht lediglich einen zentralen Bereich der magnetoresistiven Schicht bedeckt.

2. Wandler nach Anspruch 1, bei welchem (Fig. 2 und 3) der dünne Film aus weichmagnetischem Material mit der magnetoresistiven Schicht an jeder Seite ihres zentralen Bereiches in Kontakt steht.

3. Wandler nach Anspruch 2, bei welchem (Fig. 2) das die Längsvormagnetisierung erzeugende Mittel und das Leiterpaar die nichtmagnetische Entkopplungsschicht überlappen.

4. Wandler nach Anspruch 2, bei welchem (Fig. 3) das die Längsvormagnetisierung erzeugende Mittel (32') und das Paar von Leitern (34', 36') lediglich über den äußersten Teilen der Endbereiche der magnetoresistiven Schicht (22') angeordnet sind, sodaß die innersten Teile der Endbereiche nicht von dem Leiterpaar bedeckt sind.

5. Wandler nach Anspruch 1, bei welchem (Fig. 6) der dünne Film (130) aus weichmagnetischem Material die Entkopplungsschicht (128) nicht überlappt.

6. Wandler nach einem der vorgehenden Ansprüche, bei welchem die magnetoresistive Schicht aus NiFe zusammengesetzt ist.

7. Wandler nach einem der vorgehenden Ansprüche, bei welchem das eine Längsvormagnetisierung erzeugende Mittel einen dünnen Film aus antiferromagnetischem Material aufweist, der in direktem Kontakt mit den Endbereichen der magnetoresistiven Schicht steht.

8. Wandler nach Anspruch 7, bei welchem der dünne Film aus antiferromagnetischem Material aus MnFe besteht.

9. Wandler nach einem der vorgehenden Ansprüche, bei welchem das weichmagnetische Material NiFeRh ist.

10. Wandler nach einem der vorgehenden Ansprüche, bei welchem die Entkopplungsschicht aus Ta besteht.

11. Wandler nach einem der vorgehenden Ansprüche, bei welchem die magnetoresistive Schicht so geformt ist, daß sich lediglich ihr zentraler Bereich zu einer Abfühlkante hin erstreckt.

12. Wandler nach Anspruch 11, bei welchem die Endbereiche der magnetoresistiven Schicht von der Abfühlkante weggeneigt sind.

13. Wandler nach Anspruch 11 oder 12, bei welcher die Endbereiche der magnetoresistiven Schicht in einer Weise zulaufend sind, das sie mit zunehmendem Abstand von dem Zentralbereich breiter werden.

**Revendications**

1. Transducteur de lecture magnétorésistif, comprenant:

une couche magnétorésistive mince (22);

une couche de découplage non-magnétique (28) revêtant la couche magnétorésistive;

un film mince (30) de matériau magnétique doux revêtant la couche de découplage;

un moyen de production de polarisation longitudinale (32) pour produire directement une polarisation longitudinale uniquement dans les régions extrêmes (24) de la couche magnétorésistive qui soit de niveau suffisant pour maintenir les régions extrêmes de la couche magnétorésistive dans un état à domaine unique, les états à domaine unique des régions extrêmes induisant alors un état à domaine unique dans la région centrale;

une paire de conducteurs (34, 36) électriquement connectés aux extrémités opposées de ladite région centrale de la couche magnétorésistive; et

un moyen pour fournir un courant de polarisation (35) à la paire de conducteurs pour polariser magnétiquement la couche magnétorésistive avec une polarisation transversale de niveau suffisant pour maintenir la couche magnétorésistive dans une condition de sensibilité élevée ce qui fait que, lors de la connexion de la paire de conducteurs à un moyen de détection de signaux, le moyen de détection de signaux détermine dans la couche magnétorésistive les changements de résistance en fonction des champs qui sont interceptés par la couche magnétorésistive;

caractérisé en ce que:

la couche de découplage non-magnétique revêt uniquement une région centrale de la couche magnétorésistive.

2. Transducteur selon la revendication 1, dans lequel (figures 2 et 3) le film mince de matériau magnétique doux fait contact avec la couche magnétorésistive de chaque côté de la région centrale de celle-ci.

3. Transducteur selon la revendication 2, dans lequel (figure 2) le moyen de production de polarisation longitudinale et la paire de conducteurs chevauchent la couche de découplage non-magnétique.

4. Transducteur selon la revendication 2, dans lequel (figure 3) le moyen de production de polarisation longitudinale (32') et la paire de conducteurs (34' 36') sont disposés uniquement sur les parties le plus à l'extérieur des régions extrêmes de la couche magnétorésistive (22') de sorte que les parties le plus à l'intérieur des régions extrêmes ne soient pas revêtues par la paire de conducteurs.

5. Transducteur selon la revendication 1, dans lequel (figure 6) le film mince (130) de matériau magnétique doux ne chevauche pas la couche de découplage (128).

6. Transducteur selon l'une quelconque des revendications précédentes, dans lequel la couche magnétorésistive est faite de NiFe.

7. Transducteur selon l'une quelconque des revendications précédentes, dans lequel le moyen de production de polarisation longitudinale est un film mince de matériau antiferromagnétique en contact direct avec les régions extrêmes de la couche magnétorésistive.

8. Transducteur selon la revendication 7, dans lequel le film mince de matériau antiferromagnétique est MnFe.

9. Transducteur selon l'une quelconque des revendications précédentes, dans lequel le matériau magnétique doux est NiFeRh.

**10.** Transducteur selon l'une quelconque des revendications précédentes, dans lequel la couche de découplage est faite de Ta.

**11.** Transducteur selon l'une quelconque des revendications précédentes, dans lequel la forme de la couche magnétorésistive est telle que seule sa région centrale s'étende jusqu'à un bord de détection.

**12.** Transducteur selon la revendication 11, dans lequel les régions extrêmes de la couche magnétorésistive sont écartées par inclinaison dudit bord de détection.

**13.** Transducteur selon les revendications 11 ou 12, dans lequel les régions extrêmes de la couche magnétorésistive sont effilées afin de devenir plus larges avec un distance accrue depuis ladite région centrale.

PRICE ART

FIG. 1

FIG. 2

FIG. 3

FIG. 4

FIG. 5

FIG.6